# EUROPEAN PATENT SPECIFICATION

(11) **EP 0 998 838 B1**
(45) Date of publication and mention of the grant of the patent: **17.07.2002**
(21) Application number: 99203570.9
(22) Date of filing: 29.10.1999
(51) Int. Cl.: A01B 59/041

(54) **A stabilizer for three-point hitches**
Dreipunktkupplungsstabilisator
Stabilisateur pour accouplage trois-points

(30) Priority: 04.11.1998 IT BO980615
(43) Date of publication of application: 10.05.2000
(73) Proprietor: CBM S.p.A., 41100 Modena (IT)
(72) Inventor: Cornia, Enrico Maria, 41100 Modena (IT)
(74) Representative: Provvisionato, Paolo

(56) References cited:
- DE-A- 3 505 243
- DE-C- 4 135 809
- GB-A- 1 174 622

## Description

The present invention relates to a stabilizer for three-point hitches. The invention has been developed with particular, although not exclusive, regard to an automatic lateral stabilizer capable of controlling the lateral excursion of the lower arms of a three-point hitch of an agricultural tractor.

Various stabilizers for lower arms of three-point hitches are known. Simpler solutions for a lateral stabilizer involve the use of two members which are slidable relative to one another and which are secured, respectively, to the body of the tractor and to the towed vehicle or to the lower arm of the three-point hitch which pulls the towed vehicle. Those stabilizers can be locked in a position of fixed length by means of peg-type locking systems or the like, or they can be left free to be extended and shortened in accordance with the lateral movements of the towed vehicle or the lower arms relative to the tractor. Normally, a spring opposes the extension of the lateral stabilizer in order to return the towed vehicle or the lower arm towards a predetermined neutral or zero position. An example of such a simpler stabilizer of known type is illustrated in document DE 31 29 537. Stabilizers of that type permit only limited and, in most cases, unsatisfactory control of the lateral movement of the towed vehicle and/or of the lower arms of the three-point hitch.

A more advanced type of lateral stabilizer comprises a pair of springs which oppose both the extension and the shortening of the stabilizer. Examples of those known types are illustrated in documents US 3.056.458 and DE 2 416 819. The main disadvantage of those lateral stabilizers is the fact that the two springs, which act in opposition to one another, cannot be preloaded to provide efficient return action for small stabilizer movements also. Furthermore, the stabilizer illustrated in document US 3.056.458 is provided with a locking peg which passes diametrically through both of the telescopic elements, with consequent weakening of the latter. In addition, the peg-type manual locking system is particularly awkward to use.

Patent USA no. 3.250.524 illustrates a lateral stabilizer comprising two telescopic elements, each of which is provided with coupling means which enable the stabilizer to be mounted in such a manner that it is interposed between the body of the tractor and the towed vehicle or the lateral arms which pull the towed vehicle. During lateral movement of the towed vehicle, the lateral stabilizer is lengthened or shortened owing to the relative motion of the telescopic elements. The relative movement is opposed by a single spring which is compressed both when the stabilizer is lengthened and when it is shortened. This solution enables the single spring to be preloaded in such a manner as to obtain considerable return forces even for small movements of the lateral stabilizer from its neutral position.

The above-mentioned solution with a single spring has been adopted almost in its entirety in the lateral stabilizer of document DE 35 05 243, in which a system for locking the stabilizer in the neutral central position is also illustrated. The above-mentioned stabilizer comprises a tubular body and a shaft, which are mounted telescopically, and a pair of jaws which are secured in an articulated manner to the tubular body and are controlled by a lever which, when operated, causes the jaws to approach the shaft to engage in annular grooves formed therein in order to prevent movement of the shaft relative to the tubular body. That locking system is complex and expensive and also involves substantial weakening of the telescopic shaft owing to the annular grooves which are close together. In addition, at the moment when the jaws are operated to lock the stabilizer, the telescopic shaft must be in the neutral position, with the annular grooves facing the jaws. Otherwise, the stabilizer might not be locked or might be locked insufficiently securely.

Lateral stabilizers of known type therefore comprise locking systems which are awkward to use or hardly reliable, or at any rate which do not ensure reliable locking. This disadvantage is particularly felt by users who, in general, require systems that permit remote or automatic control of the equipment connected to a tractor. Control of the equipment must be simple, safe and repeatable, so that it does not require controls which are close together, or exacting manoeuvres by the user. A further disadvantage of stabilizers provided with locking systems of known type resides in the fact that those stabilizers have a relatively great overall length since the locking means have to be arranged in a longitudinal region of the stabilizer which is free from resilient return springs. Such elongate configurations of the known stabilizers are particularly disadvantageous when the space in the rear portion of the tractor, as is often the case, is limited or encumbered by other equipment. In order to reduce the longitudinal space requirement of such stabilizers, it is therefore necessary to adjust the dimensions of the return spring, reducing them to the detriment of the efficiency of the stabilizer, or to do without the locking device.

A further disadvantage of lateral stabilizers, in particular those having a single compression spring, is caused by the travel-limit positions when the stabilizer is completely extended or completely retracted. The travel-limit positions are defined purely and uniquely by the geometrical characteristics of the spring and in particular by the diameter of the wire or by the number of turns. The travel-limit positions are reached when the spring reaches maximum compression and is closed up, with all of the turns in contact with one another. This characteristic of course restricts flexibility in the design of the lateral stabilizer, limiting the ability to define travel-limit positions that are independent of the geometrical characteristics of the spring.

Yet another disadvantage of the majority of lateral stabilizers of known type is the impossibility of regulating their length in the central or neutral position without uncoupling the one or the other end of the stabilizer from the tractor or the lower arm, respectively. A possible solution to this problem is described in the already-mentioned document DE 35 05 243, in which an intermediate bush which is threaded both internally and externally is provided. This solution appears to be rather complex, bulky and hardly reliable owing to the possibility that the one or the other thread will become filled with earth, dross or debris.

The object of the present invention is to overcome the disadvantages of the prior art, and in particular to provide a lateral stabilizer of the type indicated in the preamble of claim 1, which is simple and economical to manufacture, compact, efficient and reliable in use. A further object of the invention is to provide a lateral stabilizer, the length of which in the central or neutral position can be readily and easily adjusted without having to uncouple the stabilizer from its attachments to the tractor and the lower arm. A further object is to provide an automatic lateral stabilizer which opens into the floating position when the lower arm is lowered and which, without jamming or requiring manual intervention, is locked in the neutral or central position when the lower arm is raised.

In order to achieve the objects indicated above, the invention relates to a lateral stabilizer of the type indicated in the preamble of claim 1, having the characteristics indicated in claim 1, and in the claims which follow. According to an advantageous characteristic of a particular embodiment, the stabilizer of the present invention comprises a tubular central body having an end which, in cross-section, is almost oval or elliptical. This cross-section gives the user a better grip when the length of the stabilizer has to be adjusted in the neutral or central position.

A particularly significant advantage of the stabilizer of the present invention resides in the fact that the adjustment of the length of the stabilizer in the above-mentioned neutral or central position, which is achieved by rotating the tubular central body, can be effected both when the stabilizer is floating and when it is locked. That last possibility is particularly advantageous because it enables an operator to adjust the length of the stabilizer safely, the stabilizer remaining securely coupled to the tractor and to the lower arm and being at the same time in the non-floating locked position in which it is prevented from being extended and/or shortened. The curved shape of the end of the tubular central body and the simplicity of operation of a pin or pawl make the adjustment of the length of the stabilizer extremely safe and easy.

Another particularly significant advantage of the present invention is the arrangement of discharge holes, openings and grooves in regions where earth and debris could accumulate more easily and impair the correct operation or the reliability of the stabilizer.

In one embodiment, the stabilizer of the present invention can be selectively locked in a central position by means of a system comprising a plurality of balls which are guided by one of the two telescopic elements and which are forced by a sleeve into an annular groove formed in the other telescopic element. This configuration enables the stabilizer rigidly to oppose both tensile stresses and compressive stresses. In the unlocked position, on the other hand, the stabilizer reacts to such stresses in a resilient manner thanks to a spring which, in both cases, is subjected to compressive stress. In one variant, the stabilizer of the present invention can be selectively locked in the central position in order to react rigidly to tensile stresses only or to compressive stresses only.

Further characteristics and advantages of the invention will become clear from the following description of a preferred embodiment, with reference to the appended drawings, which are given by way of non-limiting example and in which:
- Figure 1 is a longitudinal section through a stabilizer according to the present invention,
- Figure 2 is a cross-section on the line II-II of Figure 1,
- Figure 3 is a cross-section on the line III-III of Figure 1, and
- Figures 4, 5 and 6 are longitudinal sections through variants of the lateral stabilizer of Figure 1.

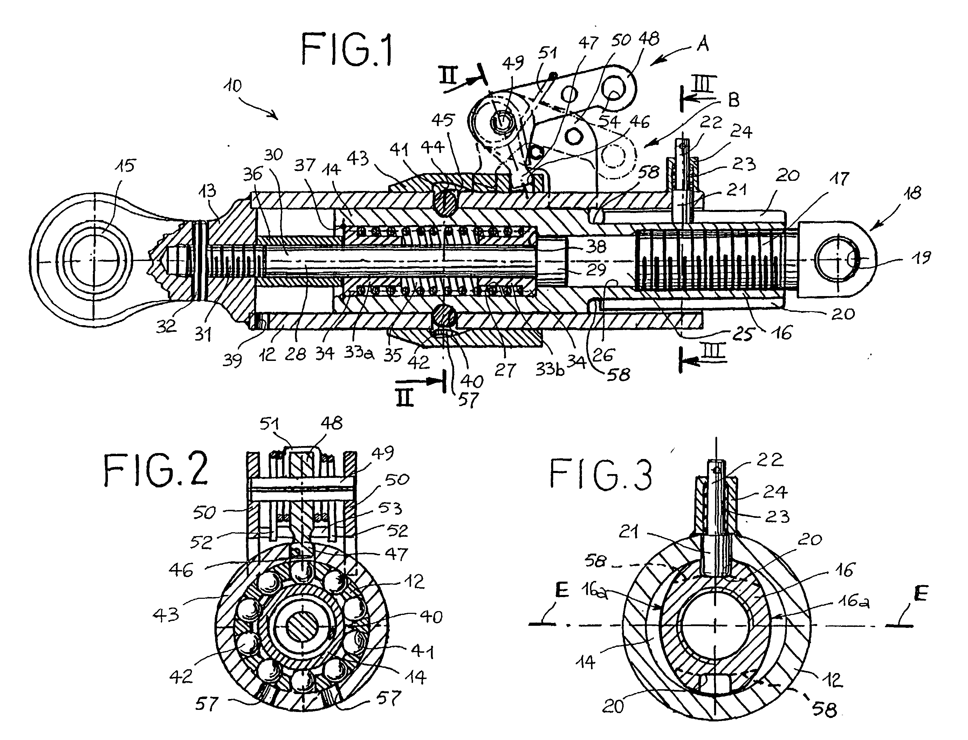

Referring now to Figures 1 to 3, a lateral stabilizer 10 comprises a tubular jacket 12 inside which a tubular body 14 is slidably mounted. One end of the jacket 12 is closed by an appendage 13 having an eye or swivelling eye trunnion 15 or another similar element which can be used to connect the stabilizer 10 to the structure of a tractor.

At the end remote from the appendage 13, the tubular body 14 projects partially from the jacket 12, its end 16 being internally threaded in order to receive, by screwing in, a spigot 17 of a member 18 for coupling the stabilizer to a lower arm of a three-point hitch, not illustrated in the drawings. In particular, but not in a limiting manner, the coupling member 18 is provided with an eyelet or hole 19 for engagement with a peg or bolt or other similar connecting member provided on the lower arm. The external wall of the tubular body 14 has, in the region of the end 16, two diametrically opposed longitudinal channels 20 in which a head 21 of a small piston 22 which passes radially through the wall of the jacket 12 can be selectively accommodated. The head 21 is held in the one or the other channel by the thrust of a spring 23 contained in a sleeve 24 through which the rod of the piston 22 passes. As shown more clearly in Figure 3, the cross-section of the tubular body 14, in the region of its end 16, is preferably oval or elliptical, with the minor diameter at right-angles to the plane of the two channels 20 which are arranged in the region of the major diameter of the section. In other words, the external walls 16a of the end 16 are squashed or lowered in the direction of the equatorial plane marked E-E.

At the more inward end of the channels 20, which is remote from the coupling member 18, are two corresponding transverse discharge grooves 58. In use, the presence of the discharge grooves 58 prevents the accumulation of debris or earth at the end of the channels 20, which could obstruct the maximum extension of the stabilizer, with the consequent risk that the piston 21 will break. Any debris which collects in the upper channel 20 is pushed to the end thereof in order then to exit laterally therefrom towards the space defined by the lowered walls 16a of the end 16 and the internal wall of the jacket 12. The longitudinal sliding movements caused by the jolting of the stabilizer in use facilitate the final discharge of debris from the above-mentioned space.

The tubular body 14 has a tubular internal cavity 25 having a first, smaller, cylindrical wall 26 which is close to the end 16 and which has a diameter smaller than that of a second, larger, wall 27 adjacent thereto. The internal cavity 25 accommodates a tie rod 30 having a head 29 with a diameter which is substantially the same as or smaller than the diameter of the smaller wall 26, and an elongate shank 28, the threaded end 31 of which is screwed into the appendage 13 and locked for safety by a resilient peg 32 driven transversely into the appendage 13.

Mounted slidably on the shank 28 of the tie rod 30 are two check members 33a, 33b which are provided with respective annular shoulders 34 between which a preferably preloaded helicoidal spring 35 is interposed. A spacer tube 36 slipped onto the shank 28 of the tie rod 30 is interposed between the check member 33a, on the left in Figure 1, and the appendage 13. A resilient abutment ring 37 is mounted in such a manner that it projects towards the inside of the cavity 25 of the tubular body 14, at the end of the larger wall 27. The annular shoulder 34 of the check member 33b, on the right in Figure 1, has a diameter larger than that of the smaller wall 26, which defines, with the larger wall 27, an annular abutment 38 inside the tubular body 14. One or more discharge openings 39 are formed in the jacket 12 in order to permit the discharge of dirt which may accumulate inside the stabilizer.

An annular groove 40 having a cross-section in the form of an arc of a circle is formed in the external wall of the tubular body 14, and holes 41 which accommodate radially movable balls 42 are formed in the outer surface of the jacket 12. In the neutral position of the stabilizer, illustrated in the drawings, the holes 41 lie on the same transverse plane of the groove 40, the radius of which is substantially equal to the radius of the balls 42. A sleeve 43 provided with an internal groove 44 having an inclined or ramp-like wall 45 is mounted slidably on the outside of the jacket 12. In the region of the internal groove 44, in that area of the sleeve 43 which, in use, faces downwards, are one or more radial discharge holes or openings 57 which are arranged in such a manner that they are offset relative to the holes 41 for accommodating the balls 42. The discharge holes permit the discharge of any debris which may, in use, infiltrate to the inside of the sleeve 43 and which, by accumulating in the internal groove 44, could impair the correct operation thereof.

The sleeve 43 has a hole 46 in which engages an actuating appendage 47 of a control lever 48 which is pivotably articulated by means of a resilient peg or pin 49 on two parallel cheeks 50 secured to the jacket 12. A spring 51 opposes the movement of the control lever 48 from position B, illustrated with a dot-dash line in Figure 1, to position A illustrated with a solid line. In particular, the spring 51 is constituted by a wire which straddles the control lever 48 and is wound in wide turns about the pin 49 to terminate with the ends 52 bearing on a peg 53. The control lever 48 has a hole 54 or similar system for the coupling, for example, of a control cable in order to bring back into the driver's cab the control of the locking of the lateral stabilizer. A widely used alternative system consists in fastening the control cable to the structure of the tractor, in a position higher than the lateral stabilizer, in order to be able to lock or unlock the stabilizer automatically simply by raising or lowering the lower arm of the three-point hitch.

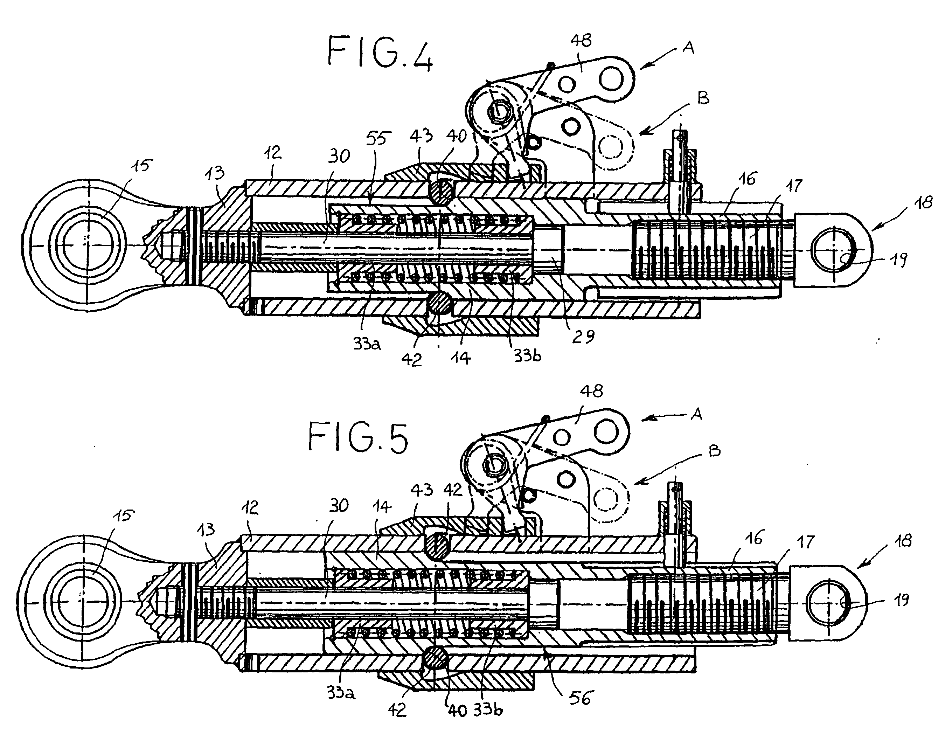

Figure 4 illustrates a variant of the stabilizer described above. In particular, the groove 40, inside which the balls 42 are partially accommodated when the stabilizer is in the locked position, is extended, on that side of the tubular body 14 which faces the appendage 13, to define a portion 55 of reduced diameter of the tubular body 14, on the left in the drawing. The groove 40 is therefore in fact reduced to a curved shoulder having a radius equal to the radius of the balls 42.

Figure 5 shows another variant which is substantially symmetrical to that of Figure 4 and in which the groove 40 is extended, on that side of the tubular body 14 which faces the coupling member 18, to define a portion 56 of reduced diameter of the tubular body 14, on the right in the drawing. In this variant too, therefore, the groove 40 is reduced to a curved shoulder having a radius equal to the radius of the balls 42.

In particular, the groove 40 in which the balls 42 are partially accommodated when the stabilizer is in the locked position, is extended, on that side of the tubular body 14 which faces the appendage 13, to define a portion 55 of reduced diameter of the tubular body 14, on the left in the drawing. The groove 40 is therefore in fact reduced to a curved shoulder having a radius equal to the radius of the balls 42.

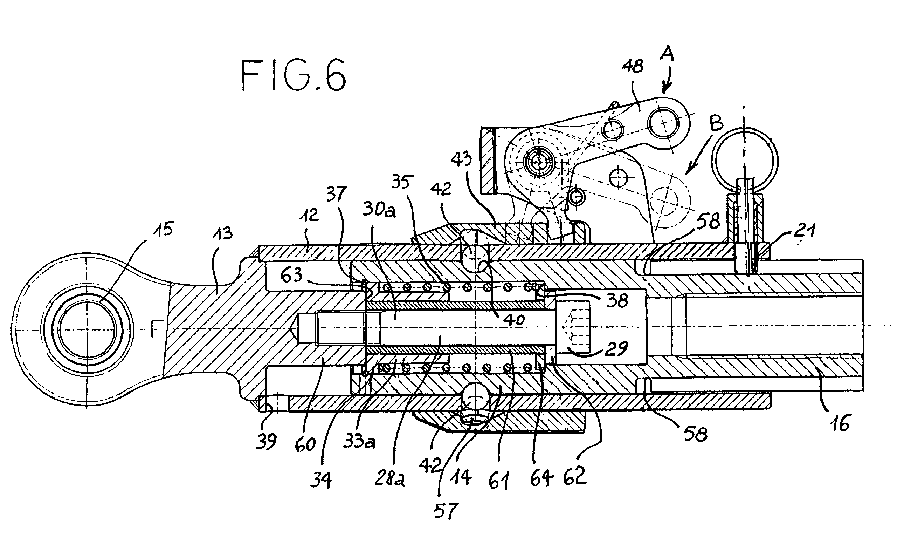

Figure 6 illustrates a further variant of the stabilizer of Figure 1. In this variant, the appendage 13 is extended, at the end remote from the eye or swivelling eye trunnion 15, by an integral cylindrical body 60 on which is screwed a tie rod 30a which is shorter than the tie rod 30 of the variants illustrated in the previous drawings. A sleeve 61, which is clamped between a fixed washer 62 bearing on the head 29 of the tie rod 30a and an end wall 63 of the cylindrical body 60, is mounted on the shank 28a of the tie rod 30a. The check member 33a, of the type described above, and a slidable washer 64 are mounted slidably on the sleeve 61. The helicoidal spring 35 is interposed between the annular shoulder 34 of the check member 33a and the slidable washer 64. The variant of Figure 6 has the advantage over the stabilizer of Figures 1, 4 and 5 that it has a stronger and more compact construction, and also that it is simpler to assemble and maintain.

When the control lever 48 is in position A of Figure 1, 4, 5 or 6, in which the lever opposes the resilient return action of the spring 51, the sleeve 43 is arranged in such a manner that the internal groove 44 faces the radial holes 41 of the jacket. In that position, as a result of moving the tubular body 14 only slightly relative to the jacket 12, the balls 42 are free to come out of the one or the other side of the annular groove 40 of Figure 1 or 6, or to pass over the shoulders defined by the annular groove in the variants of Figures 4 and 5. By means of the above-mentioned solution, the curved geometry of the annular groove 40 causes the balls 42 to move away automatically from the tubular body 14 as a result of the lengthening or shortening of the stabilizer. It is therefore unnecessary to provide resilient means or the like to hold the balls 42 at a distance from the tubular body 14 when the stabilizer 10 is in the floating position.

As mentioned above, the control lever 48 can be maintained in position A by means of a tension cable returned to the driver's cab, or, more simply, held by the rear structure of the tractor when the lower arm, to which the coupling member 18 of the stabilizer is connected, is lowered, for example in order to commence work on an area of land using a towed item of agricultural equipment.

When, however, either owing to operation of the tension cable from the driver's cab, or because the lower arm is raised, for example when an agricultural tractor is travelling on a road, the control lever 48 is returned by the spring 51 to position B of Figure 1, 4, 5 or 6, the control appendage 47 pushes the sleeve 43, causing it to slide on the jacket 12 until the inclined wall 45 of the internal groove 44 forces the balls 42 into the annular groove 40 of Figure 1 or 6, or more generally onto the wall of the portions of reduced diameter 55, 56, in the case of the variants of Figures 4 and 5, respectively. The natural jolting of the agricultural equipment, of the tractor and thus of the lateral stabilizer, together with the thrust of the inclined wall 45 on the balls 42 promote the accommodation of the balls in the annular groove 40 (Figure 1 or 6) or on the portions of reduced diameter 55, 56 (Figures 4 and 5, respectively) until the lateral stabilizer is locked in the central position illustrated in the drawings.

In more detail, in the solutions illustrated in Figures 1 and 6, the stabilizer is locked rigidly relative to both the tensile stresses and the compressive stresses applied to its ends 15 and 18. In the solution illustrated in Figure 4, however, the stabilizer is locked rigidly only relative to compressive stresses, since the shoulder defined by the groove 40 prevents further movement of the tubular body 14 towards the appendage 13 relative to the central position illustrated in Figure 4. The stabilizer is, on the other hand, free to be extended when its ends are subjected to tensile stress, since the balls 42 are free to slide on the wall 55 of reduced diameter. The position of the lever 48 of the stabilizer of Figure 4 is therefore irrelevant as regards tensile stresses, whereas it determines the locked or floating behaviour of the stabilizer relative to compressive stresses. In contrast, in the variant illustrated in Figure 5, the stabilizer is locked rigidly only relative to tensile stresses since the shoulder defined by the groove 40 prevents further movement of the tubular body 14 towards the coupling member 18 relative to the central position illustrated in Figure 5. The stabilizer is, on the other hand, free to be shortened when its ends are subjected to compressive stresses, since the balls 42 are free to slide on the wall 56 of reduced diameter. The position of the lever 48 of the stabilizer of Figure 5 is therefore irrelevant as regards compressive stresses, while it determines the locked or floating behaviour of the stabilizer relative to tensile stresses.

When the stabilizer is in the unlocked position, with the control lever 48 in position A of the examples of Figure 1, 4, 5 or 6, the tubular body 14 is slidably movable inside the jacket 12 and relative to the tie rod 30, which is secured to the jacket 12 by means of the appendage 13. When the two ends of the stabilizer 10, that is to say, the eye 15 and the coupling member 18, move away from one another, the head 29 of the tie rod 30 holds the right-hand check member 33b or, in the variant of Figure 6, the slidable washer 64, while the resilient ring 37 secured to the tubular body 14 holds the left-hand check member 33a. Owing to the relative motion between the tie rod 30 and the tubular body 14, the check member 33a and the check member 33b or, in the variant of Figure 6, the slidable washer 64, move towards one another, compressing the spring 35 which thus opposes the lengthening of the stabilizer, returning it towards the central neutral position.

When, on the other hand, the two ends of the stabilizer 10, that is to say, the eye 15 and the coupling member 18, move towards one another, the annular abutment 38 of the internal cavity 25 pushes on the shoulder 34 of the right-hand check member 33b or, in the variant of Figure 6, on the slidable washer 64, while the appendage 13 of the jacket 12 pushes the left-hand check member 33a by means of the tube 36 or, in the variant of Figure 6, by means of the wall 63. Owing to the relative motion between the jacket 12 and the tubular body 14, the check member 33a and the check member 33b or, in the variant of Figure 6, the slidable washer 64, move towards one another in this case also, again compressing the spring 35 which thus also opposes the shortening of the stabilizer, returning it towards the central neutral position.

Owing to the fact that the check member 33a and the check member 33b or, in the variant of Figure 6, the slidable washer 64, compress the spring 35 and move gradually towards one another both when the stabilizer 10 is lengthened and when it is shortened, in both cases the stabilizer reaches a travel-limit position when the check member 33a and the check member 33b or, in the variant of Figure 6, the slidable washer 64, come into contact with one another, even though the spring 35 has still not reached its maximum compression and its turns have not yet been packed closely against one another. It is therefore possible to select at the design stage the maximum excursion of the stabilizer 10 in the one or the other direction relative to the central position, simply by modifying the length of the check members 33a, 33b or, in the variant of Figure 6, of the check member 33a only. The choice of the characteristics of the spring 35, and in particular the choice of the number and the diameter of the turns, is therefore independent of the requirement to provide for travel-limit positions during the excursion of the stabilizer in the floating state, which are provided by the check member 33a and by the check member 33b or by the slidable washer 64 and not, or at least not necessarily, by the packed compression of the spring 35.

When it is necessary to modify the length of the lateral stabilizer 10 in the central neutral position, in order to adapt the three-point hitch to agricultural equipment of different dimensions, it is not necessary to uncouple the coupling member 18 from the lower arm, unlike the situation with the majority of lateral stabilizers of known type. It is sufficient to lift the head 21 of the piston 22 in opposition to the spring 23 and to rotate the end 16 of the tubular body 14, screwing it in the one or the other direction, to a greater or lesser extent, onto the coupling member 18, until the desired length of the stabilizer is reached. The elliptical or oval shape of the end 16 makes it easier for the user to grip and rotate it. In addition, the piston 22 can be released at any time, without having to centre one of the two channels 20 exactly, because it is necessary only to continue to rotate the end 16 to the extent sufficient for its elliptical or oval wall 16a to guide, in the manner of a ramp or a cam, the head 21 up to the point at which the latter finally penetrates into one of the channels 20.

A particularly significant advantage of the stabilizer of the present invention resides in the fact that the adjustment of the overall length of the stabilizer, achieved by rotating the tubular body 14, can be carried out either with the stabilizer floating, with the lever 48 in position A, or with the stabilizer locked, with the lever 48 in position B. This last possibility is particularly advantageous because it enables an operator safely to adjust the length of the stabilizer which remains securely coupled to the tractor and to the lower arm and which is at the same time held in the non-floating locked position. The curved shape of the end 16 and the simplicity of operation of the pin or pawl 21 make the adjustment of the length of the stabilizer extremely safe and easy.

Naturally, the principle of the invention remaining the same, the forms of embodiment and details of construction may be varied widely with respect to those described and illustrated, without thereby departing from the scope of the present invention as claimed.

## Claims

1. A stabilizer for three-point hitches, comprising a tubular jacket (12) inside which an elongate central body (14) is mounted in such a manner that it can slide telescopically, locking means (40, 42, 43, 48) being operable selectively between an unlocked position (A) in which the elongate central body (14) is floating in the tubular jacket (12), and a locked position (B) in which the elongate central body (14) is attached to the tubular jacket (12), **characterized in that** it also comprises a cylindrical tie rod (30, 30a) which is secured at one of its ends (31) to the tubular jacket (12) and which extends inside a cylindrical cavity (25) of the elongate central body (14).

2. A stabilizer according to claim 1, **characterized in that** the cylindrical tie rod (30, 30a) is secured to the tubular jacket (12) with the interposition of an appendage (13) having a coupling member (15) for the stabilizer.

3. A stabilizer according to claim 1, **characterized in that** there are slidably mounted on the cylindrical tie rod (30, 30a) two check members (33a, 33b, 64) defining two respective shoulders (34, 64) between which a resilient element (35) is arranged.

4. A stabilizer according to claim 3, **characterized in that** the resilient element (35) is a helicoidal spring arranged concentrically with the cylindrical tie rod (30, 30a).

5. A stabilizer according to claim 3, **characterized in that** respective pairs of abutment elements (29, 62, 36, 63; 37, 38) are defined on the cylindrical tie rod (30, 30a) and in the cylindrical cavity (25) and cooperate with the check members (33a, 33b, 64) in order to pull those members towards one another as a result of the floating movement of the stabilizer either in a lengthening manner or in a shortening manner.

6. A stabilizer according to any one of the preceding claims, **characterized in that** the locking means comprise at least one abutment surface (40) formed on the external wall of the elongate central body (14), a plurality of balls (42) accommodated in a radially movable manner in respective radial openings (41) formed in the tubular jacket (12), sleeve means (43) provided with an internal ramp-like wall (45) and mounted slidably on the outside of the tubular jacket (12), a movement of the sleeve means (43) towards the locking position (B) causing, selectively, thrust to be exerted by the ramp-like wall (45) on the balls (42) in the radial direction towards the elongate central body (14) such as to hold them in a position of interference with the abutment surface (40).

7. A stabilizer according to claim 6, **characterized in that** one or more radial through-openings (57) for the discharge of any debris are formed in the vicinity of the ramp-like wall (45) of the sleeve means (43).

8. A stabilizer according to claim 6, **characterized in that**, in the locked position (B) of the stabilizer (10), the balls (42) interfere with the abutment surface (40) in at least one sliding direction starting from a neutral central position of the stabilizer, the abutment surface (40) being connected to a portion of reduced diameter (55, 56) of the elongate central body (14).

9. A stabilizer according to claim 8, **characterized in that**, in the locked position (B) of the stabilizer (10), the balls (42) interfere with the abutment surface (40) in both sliding directions starting from a neutral central position of the stabilizer, the abutment surface (40) being an annular groove formed in the elongate central body (14).

10. A stabilizer according to claim 6, **characterized in that** the sleeve means (43) are coupled to lever means (48) articulated to a support (50) secured to the tubular jacket (12).

11. A stabilizer according to claim 10, **characterized in that** it comprises resilient means (51) for returning the lever means (48) from the floating position (A) to the locked position (B) of the stabilizer.

12. A stabilizer according to any one of the preceding claims, **characterized in that** threaded adjustable coupling means (18) for the stabilizer are connected to one end (16) of the elongate central body (14).

13. A stabilizer according to claim 12, **characterized in that** the end (16) of the elongate central body has a cross-section which is squashed or lowered in the direction of an equatorial plane (E-E).

14. A stabilizer according to claim 12, **characterized in that** the elongate central body (14) is rotatable about its axis relative to the tubular jacket (12) and to the coupling means (18) regardless of whether the floating position (A) or the position (B) locked by the locking means (40, 42, 43, 48) has been adopted, stop means (20, 21) being provided in order to permit or prevent selectively the rotation of the elongate central body (14).

15. A stabilizer according to claims 13 and 14, **characterized in that** the stop means comprise at least one longitudinal channel (20) which is at right-angles to the equatorial plane (E-E), a pin (23) mounted on the tubular jacket (12) being selectively insertable into the at least one longitudinal channel (20).

16. A stabilizer according to claim 15, **characterized in that** it comprises two longitudinal channels (20) which are arranged diametrically opposite one another and are aligned on a plane which is at right-angles to the equatorial plane (E-E).

17. A stabilizer according to claim 13, **characterized in that** the longitudinal channels (20) communicate with transverse discharge grooves (58) opening out at the outside of the end (16) of the elongate central body, towards the external walls (16a) of the cross-section which is squashed or lowered in the direction of the equatorial plane (E-E).

## Patentansprüche

1. Dreipunktkupplungsstabilisator, mit einem röhrenförmigen Mantel (12), in dem ein länglicher mittlerer Körper (14) so angebracht ist, daß er teleskopartig gleiten kann, Verriegelungsmitteln (40, 42, 43, 48), die gezielt zwischen einer entriegelten Stellung (A), in der der längliche mittlere Körper (14) im röhrenförmigen Mantel (12) beweglich ist, und einer verriegelten Stellung (B), in der der längliche mittlere Körper (14) am röhrenförmigen Mantel (12) befestigt ist, betätigbar sind, **dadurch gekennzeichnet, daß** er des weiteren eine zylindrische Zugstange (30, 30a) umfaßt, die an einem ihrer Enden (31) an dem röhrenförmigen Mantel (12) befestigt ist und sich innerhalb eines zylindrischen Hohlraums (25) des länglichen mittleren Körpers (14) erstreckt.

2. Stabilisator nach Anspruch 1, **dadurch gekennzeichnet, daß** die zylindrische Zugstange (30, 30a) unter Zwischenschaltung eines Ansatzes (13) mit einem Kupplungsglied (15) für den Stabilisator am röhrenförmigen Mantel (12) befestigt ist.

3. Stabilisator nach Anspruch 1, **dadurch gekennzeichnet, daß** an der zylindrischen Zugstange (30, 30a) zwei Sperrglieder (33a, 33b, 64) verschiebbar angebracht sind, die zwei jeweilige Schultern (34, 64) definieren, zwischen denen ein elastisches Element (35) angeordnet ist.

4. Stabilisator nach Anspruch 3, **dadurch gekennzeichnet, daß** das elastische Element (35) eine konzentrisch zur zylindrischen Zugstange (30, 30a) angeordnete Schraubenfeder ist.

5. Stabilisator nach Anspruch 3, **dadurch gekennzeichnet, daß** jeweilige Paare von Anstoßelementen (29, 62, 36, 63; 37, 38) an der zylindrischen Zugstange (30, 30a) und im zylindrischen Hohlraum (25) definiert sind und mit den Sperrgliedern (33a, 33b, 64) zusammenwirken, um jene Glieder infolge der freien Bewegung des Stabilisators entweder auf verlängernde oder auf verkürzende Weise aufeinander zu zu ziehen.

6. Stabilisator nach einem der vorhergehenden Ansprüche, **dadurch gekennzeichnet, daß** die Verriegelungsmittel mindestens eine an der Außenwand des länglichen mittleren Körpers (14) ausgebildete Stoßfläche (40), mehrere auf radial bewegliche Weise in jeweiligen im röhrenförmigen Mantel (12) ausgebildeten radialen Öffnungen (41) untergebrachte Kugeln (42) und mit einer inneren rampenförmigen Wand (45) versehene und gleitend auf des Außenseite des röhrenförmigen Mantels angebrachte Hülsenmittel (43) umfassen, wobei eine Bewegung der Hülsenmittel (43) in Richtung der Verriegelungsstellung (B) bewirkt, daß von der rampenförmigen Wand (45) auf die Kugeln (42) gezielt ein Schub in radialer Richtung zum länglichen mittleren Körper (14) hin ausgeübt wird, um sie an die Stoßfläche (40) gepreßt festzuhalten.

7. Stabilisator nach Anspruch 6, **dadurch gekennzeichnet, daß** eine oder mehrere radiale Durchgangsöffnungen (57) zur Abführung von jeglichen Schmutzteilchen in der Nähe der rampenförmigen Wand (45) der Hülsenmittel (43) ausgebildet sind.

8. Stabilisator nach Anspruch 6, **dadurch gekennzeichnet, daß** die Kugeln (42) in der verriegelten Stellung (B) des Stabilisators (10) in mindestens einer Gleitrichtung, ausgehend von einer neutralen mittleren Stellung des Stabilisators, von der Stoßfläche (40) behindert werden, wobei die Stoßfläche (40) mit einem einen verminderten Durchmesser (55, 56) aufweisenden Teil des länglichen mittleren Körpers (14) verbunden ist.

9. Stabilisator nach Anspruch 8, **dadurch gekennzeichnet, daß** die Kugeln (42) in der verriegelten Stellung (B) des Stabilisators (10) in beiden Gleitrichtungen, ausgehend von einer neutralen mittleren Stellung des Stabilisators, von der Stoßfläche (40) behindert werden, wobei die Stoßfläche (40) eine in dem länglichen mittleren Körper (14) ausgebildete ringförmige Nut ist.

10. Stabilisator nach Anspruch 6, **dadurch gekennzeichnet, daß** die Hülsenmittel (43) mit an einem Träger (50), der am röhrenförmigen Mantel (12) befestigt ist, angelenkten Hebelmitteln (48) verbunden sind.

11. Stabilisator nach Anspruch 10, **dadurch gekennzeichnet, daß** er elastische Mittel (51) zur Rückführung der Hebelmittel (48) aus der beweglichen Stellung (A) in die verriegelte Stellung (B) des Stabilisators umfaßt.

12. Stabilisator nach einem der vorhergehenden Ansprüche, **dadurch gekennzeichnet, daß** mit einem Gewinde versehene, einstellbare Kupplungsmittel (18) für den Stabilisator mit einem Ende (16) des länglichen mittleren Körpers (14) verbunden sind.

13. Stabilisator nach Anspruch 12, **dadurch gekennzeichnet, daß** das Ende (16) des länglichen mittleren Körpers einen Querschnitt aufweist, der in Richtung einer Äquatorialebene (E-E) zusammengedrückt oder vermindert ist.

14. Stabilisator nach Anspruch 12, **dadurch gekennzeichnet, daß** der längliche mittlere Körper (14) um seine Achse bezüglich des röhrenförmigen Mantels (12) und der Kupplungsmittel (18) drehbar ist, unabhängig davon, ob die bewegliche Stellung (A) oder die durch die Verriegelungsmittel (40, 42, 43, 48) verriegelte Stellung (B) eingenommen wurde, wobei Anschlagmittel (20, 21) vorgesehen sind, um die Drehung des länglichen mittleren Körpers (14) gezielt zu gestatten oder zu verhindern.

15. Stabilisator nach den Ansprüchen 13 und 14, **dadurch gekennzeichnet, daß** die Anschlagmittel mindestens einen im rechten Winkel zur Äquatorialebene (E-E) liegenden Längskanal (20) umfassen, wobei ein am röhrenförmigen Mantel (12) angebrachter Stift (23) gezielt in den mindestens einen Längskanal (20) eingesetzt werden kann.

16. Stabilisator nach Anspruch 15, **dadurch gekennzeichnet, daß** er zwei Längskanäle (20) umfaßt, die diametral einander gegenüber angeordnet und auf eine im rechten Winkel zur Äquatorialebene (E-E) liegende Ebene ausgerichtet sind.

17. Stabilisator nach Anspruch 13, **dadurch gekennzeichnet, daß** die Längskanäle (20) mit in Querrichtung verlaufenden Abführnuten (58) in Verbindung stehen, die an der Außenseite des Endes (16) des länglichen mittleren Körpers in Richtung der Außenwände (16a) des in Richtung der Äquatorialebene (E-E) zusammengedrückten oder verminderten Querschnitts münden.

## Revendications

1. Stabilisateur pour attelage trois points, comprenant une enveloppe tubulaire (12) à l'intérieur de laquelle un corps central allongé (14) est monté de telle sorte qu'il peut coulisser de manière télescopique, des moyens de verrouillage (40, 42, 43, 48) pouvant être actionnés de manière sélective entre une position de déverrouillage (A) dans laquelle le corps central allongé (14) flotte dans l'enveloppe tubulaire (12), et une position de verrouillage (B) dans laquelle le corps central allongé (14) est fixé sur l'enveloppe tubulaire (12), **caractérisé en ce qu'**il comprend également une barre d'accouplement cylindrique (30, 30a) qui est fixée à l'une de ses extrémité (31) à l'enveloppe tubulaire (12) et qui s'étend à l'intérieur d'une cavité cylindrique (25) du corps central allongé (14).

2. Stabilisateur selon la revendication 1, **caractérisé en ce que** la barre d'accouplement cylindrique (30, 30a) est fixée à l'enveloppe tubulaire (12), un appendice (13) comportant un élément d'accouplement (15) destiné au stabilisateur étant disposé entre elles.

3. Stabilisateur selon la revendication 1, **caractérisé en ce que** deux éléments de contrôle (33a, 33b, 64) sont montés en coulissement sur la barre d'accouplement cylindrique (30, 30a) définissant deux épaulements respectifs (34, 64) entre lesquels est aménagé un élément élastique (35).

4. Stabilisateur selon la revendication 3, **caractérisé en ce que** l'élément élastique (35) est un ressort hélicoïdal aménagé de manière concentrique à la barre d'accouplement cylindrique (30, 30a).

5. Stabilisateur selon la revendication 3, **caractérisé en ce que** des paires respectives d'éléments de butée (29, 62, 36, 63 ; 37, 38) sont définies sur la barre d'accouplement cylindrique (30, 30a) et dans la cavité cylindrique (25) et coopèrent avec les éléments de contrôle (33a, 33b, 64) de manière à tirer ces éléments les uns vers les autres en tant que résultat du déplacement flottant du stabilisateur soit dans le sens d'un allongement soit dans le sens d'un raccourcissement.

6. Stabilisateur selon l'une quelconque des revendications précédentes, **caractérisé en ce que** les moyens de verrouillage comprennent au moins une surface de butée (40) formée sur la paroi externe du corps central allongé (14), une pluralité de billes (42) logées de manière à pouvoir se déplacer dans le sens radial dans des ouvertures radiales respectives (41) formées dans l'enveloppe tubulaire (12), des moyens de manchon (43) comportant une paroi interne en forme de rampe (45) et montés en coulissement à l'extérieur de l'enveloppe tubulaire (12), un déplacement des moyens de manchon (43) vers la position de verrouillage (B) provoquant, de manière sélective, une poussée exercée par la paroi en forme de rampe (45) sur les billes (42) dans le sens radial vers le corps central allongé (14) de manière à les maintenir dans une position d'interférence avec la surface de butée (40).

7. Stabilisateur selon la revendication 6, **caractérisé en ce qu'**une ou plusieurs ouvertures traversantes (57) destinées à l'évacuation de tout résidu sont formées à proximité de la paroi en forme de rampe (45) des moyens de manchon (43).

8. Stabilisateur selon la revendication 6, **caractérisé en ce que**, dans la position de verrouillage (B) du stabilisateur (10), les billes (42) interfèrent avec la surface de butée (40) dans au moins une direction de coulissement en partant d'une position centrale neutre du stabilisateur, la surface de butée (40) étant en connexion avec une partie à diamètre réduit (55, 56) du corps central allongé (14).

9. Stabilisateur selon la revendication 8, **caractérisé en ce que**, dans la position de verrouillage (B) du stabilisateur (10), les billes (42) interfèrent avec la surface de butée (40) dans les deux directions de coulissement en partant d'une position centrale neutre du stabilisateur, la surface de butée (40) étant une gorge annulaire formée dans le corps central allongé (14).

10. Stabilisateur selon la revendication 6, **caractérisé en ce que** les moyens de manchon (43) sont accouplés à des moyens de levier (48) articulés sur un support (50) fixé sur l'enveloppe tubulaire (12).

11. Stabilisateur selon la revendication 10, **caractérisé en ce qu'**il comprend des moyens élastiques (51) destinés à faire revenir les moyens de levier (48) depuis la position flottante (A) jusqu'à la position de verrouillage (B) du stabilisateur.

12. Stabilisateur selon l'une quelconque des revendications précédentes, **caractérisé en ce que** des moyens d'accouplement filetés réglables (18) destinés au stabilisateur sont connectés à une extrémité (16) du corps central allongé (14).

13. Stabilisateur selon la revendication 12, **caractérisé en ce que** l'extrémité (16) du corps central allongé (14) a une coupe transversale qui est aplatie ou abaissée dans la direction d'un plan équatorial (E-E).

14. Stabilisateur selon la revendication 12, **caractérisé en ce que** le corps central allongé (14) peut tourner autour de son axe par rapport à l'enveloppe tubulaire (12) et aux moyens d'accouplement (18) sans tenir compte de l'adoption soit de la position flottante (A) soit de la position (B) verrouillée par les moyens de verrouillage (40, 42, 43, 48), des moyens d'arrêt (20, 21) étant fournis de manière à permettre ou à empêcher de manière sélective la rotation du corps central allongé (14).

15. Stabilisateur selon les revendications 13 et 14, **caractérisé en ce que** les moyens d'arrêt comprennent au moins un canal longitudinal (20) qui est à angle droit par rapport au plan équatorial (E - E), une goupille (23) montée sur l'enveloppe tubulaire (12) pouvant être introduite de manière sélective à l'intérieur d'au moins un canal longitudinal (20).

16. Stabilisateur selon la revendication 15, **caractérisé en ce qu'**il comprend deux canaux longitudinaux (20) qui sont aménagés de manière diamétralement opposée l'un par rapport à l'autre et qui sont alignés dans un plan qui est à angle droit par rapport au plan équatorial (E - E).

17. Stabilisateur selon la revendication 13, **caractérisé en ce que** les canaux longitudinaux (20) sont en communication avec des gorges d'évacuation transversales (58) s'ouvrant sur l'extérieur de l'extrémité (16) du corps central allongé (14), vers les parois externes (16a) de la coupe transversale qui est aplatie ou abaissée dans la direction du plan équatorial (E - E).
